# EUROPÄISCHE PATENTANMELDUNG

(11) **EP 4 342 822 A1**
(43) Veröffentlichungstag der Anmeldung: **27.03.2024**
(21) Anmeldenummer: 22196702.9
(22) Anmeldetag: 20.09.2022
(51) Int. Cl.: B65G 1/137, B65G 47/61, B65G 9/00

(54) **TASCHENLADESTATION ZUM BE- UND/ODER ENTLADEN VON TRAGETASCHEN EINES HÄNGEFÖRDERERS SOWIE EIN ENTSPRECHENDES VERFAHREN**

(71) Anmelder: BEUMER Group GmbH & Co. KG, 59269 Beckum (DE)
(72) Erfinder: Sandor, Nicolas, 8583 Edelschrott (AT)
(74) Vertreter: Angerhausen, Christoph

(57) **Zusammenfassung**

Die Erfindung betrifft eine Taschenladestation (1) zum Be- und/oder Entladen von Tragetaschen (100) eines Hängeförderers, wobei die Taschenladestation (1) eine Förderschiene (2) mit entlang der Förderschiene (2) beweglichen Carriern (3) zur Aufnahme je einer Tragetasche (100) aufweist, dadurch gekennzeichnet, dass die Taschenladestation (1) eine Taschenführung (4) mit mindestens einem Transportelement (5) für den Transport eines der Carrier (3) entlang der Taschenführung (4) aufweist, wobei die Förderschiene (2) an einem Übergang (6) endet, an dem die Förderschiene (2) in die Taschenführung (4) mündet, wobei das Transportelement (5) in der Taschenführung (4) zwischen einer Carrier-Annahmeposition, an der das Transportelement (5) mit der Förderschiene (2) fluchtet, und einer Belade- und/oder Entladeposition, an der der Carrier (3) außerhalb der vertikalen Flucht der Förderschiene (2) angeordnet ist, gefördert ist.

## Beschreibung

Die Erfindung geht aus von einer Taschenladestation gemäß dem Oberbegriff des Patentanspruchs 1. Eine derartige Taschenladestation ist aus der EP 2418160 B1 bekannt.

Die bekannte Taschenladestation sieht vor, dass die Tasche eine 90°-Drehung in Bezug auf den Carrier vollziehen soll, um von einer Transportstellung in eine Beladestellung verschwenkt zu werden. Dazu soll eine Kupplung zwischen einem Taschenbügel der zu be- oder entladenen Tasche und dem Carrier, über den die Tasche in die Förderschiene eingehängt ist, in sich verdreht werden. Die Verdrehung der Tasche in Bezug auf den Carrier setzt den Taschenbügel und den Carrier einer hoher Belastung aus, wodurch die bekannte Anordnung vergleichsweise hohem Verschleiß ausgesetzt ist.

Es ist daher die Aufgabe der Erfindung, die bekannte Taschenladestation derart weiterzuentwickeln, dass sie die verschleißarme Taschenbe- und entladung erlaubt.

Diese Aufgabe wird durch eine Taschenladestation mit den Merkmalen des Anspruchs 1 gelöst. Ein entsprechendes Verfahren ist Gegenstand des Anspruchs 20. Vorteilhafte Ausführungsformen der Erfindung sind Gegenstand der abhängigen Ansprüche.

Demgemäß ist vorgesehen, dass die Taschenladestation eine Taschenführung mit mindestens einem Transportelement für den Transport eines der Carrier aufweist, wobei die Förderschiene an einem Übergang endet, an dem die Förderschiene in die Taschenführung mündet, wobei das Transportelement in der Taschenführung zwischen einer Carrier-Annahmeposition an dem Übergang und einer von der Förderschiene weiter beabstandeten Belade- und/oder Entladeposition gefördert ist.

Das Transportelement kann in der Carrier-Annahmeposition mit der Förderschiene fluchten, sodass der Carrier nach dem Verlassen der Förderschiene, beispielsweise über eine endseitige Stirnseite der Förderschiene, an das Transportelement übergeben werden kann. Beispielweise kann der Carrier zumindest mit seinem Carrierkopf, vorzugsweise einschließlich der Laufrollen, in eine Aufnahme des Transportelements eingesetzt werden. Das Transportelement kann zumindest abschnittsweise dieselbe Querschnittsgeometrie wie die Förderschiene aufweisen. Beispielsweise kann das Transportelement die Querschnittsgeometrie der Förderschiene insoweit aufweisen, als dass die Förderschiene geometrisch für die Aufnahme und Führung des Carrierkopfes ausgebildet ist.

Dadurch, dass das Transportelement mit dem gegebenenfalls in dem Transportelement aufgenommenen Carrier und daran befestigter Tragetasche in der Belade- und/oder Entladeposition beabstandet von der Förderschiene angeordnet ist, ist Transportelement in der Belade- und/oder Entladeposition außerhalb der vertikalen Flucht der Förderschiene angeordnet, wodurch das Beladen und Entladen einer gegebenenfalls über den in dem Transportelement aufgenommenen Carrier gehaltenen Tragetasche erleichtert wird.

Der Erfindung liegt somit die Idee zugrunde, anstelle die Tasche einschließlich ihres Taschenbügels in Bezug auf den Carrier zu verdrehen, um die Tasche aus einer Transportstellung in eine Belade- oder Entladeposition zu bringen, den Carrier aus der Förderschiene zu entnehmen und mithilfe einer Taschenführung von der Förderschiene weiter zu entfernen und dadurch aus der vertikalen Flucht der Förderschiene für die einfache Beladung oder Entladung heraus zu transportieren. Eine Verschränkung des Taschenbügels in Bezug auf den Carrier ist nicht erforderlich. Der Taschenbügel kann jederzeit in einem in Bezug auf den Carrier relaxierten Zustand verbleiben.

In der Belade- und/oder Entladeposition kann das Transportelement mit einer weiteren Förderschiene für die Abführung des Carrier nach dem Beladen oder Entladen der an dem Carrier befestigten Tasche aus der Taschenladestation fluchten. Der Carrier kann in der Belade- und/oder Entladeposition manuell oder automatisiert aus dem Transportelement in die zweite Förderschiene überführt werden. Die zweite Förderschiene kann wie auch die erste Förderschiene mit ihrem Schienenende senkrecht zu der Taschenführung angeordnet sein und in die Taschenführung münden. Der Carrier kann über das freie Ende der ersten Förderschiene aus der ersten Förderschiene heraustreten und/oder über das freie Ende einer zweiten Förderschiene für die Abführung des Carrier in die zweite Förderschiene eintreten.

Das Transportelement kann eine Aufnahme aufweisen, in der der Carrier zumindest mit seinen Carrierkopf, vorzugsweise einschließlich seiner Laufrollen, aufgenommen ist Anders als in der Führungsschiene ist es hierbei nicht erforderlich, dass der Carrier in der Taschenführung auf seinen Laufrollen abrollt. Der Carrier kann vielmehr mithilfe des Transportelements entlang der Taschenführung gefördert sein. Die Taschenführung kann dazu mindestens einen Antrieb aufweisen, mit dem das mindestens eine Transportelement entlang der Taschenführung von der Carrier-Aufnahmeposition in die Belade- und/oder Entladeposition transportiert ist. Der Carrier kann mit seinem der Tasche zugewandten Ende aus dem Transportelement und aus der Taschenführung herausragen und zur Unterseite der Taschenführung vorstehen.

Das Transportelement kann dazu eingerichtet sein, den Carrier so aufzunehmen, dass sich die Laufrichtung der Laufrollen senkrecht zu der Taschenführung, insbesondere senkrecht zu mindestens einer Gleitschiene der Taschenführung erstreckt, entlang welcher das Transportelement entlang der Taschenführung geführt ist.

Das Transportelement kann eine Öffnung aufweisen, die in der Belade- und/oder Entladeposition der Förderschiene zugewandt ist. Über die Öffnung kann der Carrier in das Transportelement in der Belade- und/oder Entladeposition eintreten. An einer der Öffnung gegenüberliegenden Seite kann das Transportelement von einer Rückwand verschlossen sein. Vorzugsweise ist das Transportelement an der der Öffnung gegenüberliegenden Seite ebenfalls offen, sodass der Carrier in Laufrichtung seiner Laufrollen entlang der Taschenführung in Bereichen zwischen der Belade- und/oder Entladeposition von die gegenüberliegenden Öffnungen verschließenden Gleitschienen, die Anschläge für den Carrier bereitstellen, verschlossen sind.

Das Transportelement kann mindestens einen Sensor zum Auslesen eines Codes des Carriers, etwas eines Barcodes, eines QR-Codes, oder eines RFID-Codes, aufweisen. Der Sensor kann beispielsweise in einer Aufnahme des Transportelements zur Aufnahme des Carriers angeordnet oder zumindest für die Auslesung des Codes eingerichtet sein, wenn ein Carrier in dem Transportelement gehalten ist, in das Transportelement eintritt und/oder aus dem Transportelement austritt. Bei dem Beladen und/oder Entladen der Tragetasche kann der Code ausgelesen werden. Zudem kann der Sensor dazu eingerichtet sein, zu erkenn, ob ein und ggf. welcher Carrier in das Transportelement eingetreten ist, ob ein Carrier in der Aufnahme enthalten oder die Aufnahme leer ist. Ebenso kann erfasst werden, dass nach dem Austritt des Carriers aus der Aufnahme das Transportelement leer ist.

Das Transportelement kann dazu eingerichtet sein, in der Taschenführung eine Drehung, etwa eine 90°-Drehung, um die Vertikalachse auszuführen. Die Drehung kann an einer beliebiger Position zwischen der Carrier-Annahmeposition und der Belade- und/oder Entladeposition ausgeführt werden. Bei mehreren Transportelementen kann jedes Transportelement einen eigenen Antrieb aufweisen, so dass die Transportelemente unabhängig voneinander um die Vertikalachse gedreht werden können.

Vorzugsweise tritt der Carrier an jeweils einer von zwei gegenüberliegenden Seiten der Taschenführung, beispielsweise durch jeweils eine von zwei gegenüberliegenden Gleitschienen der Taschenführung, in der Carrier-Annahmeposition in das Transportelement ein bzw. in der Be- und/oder Entladeposition aus dem Transportelement aus.

Das Transportelement kann als ein Schlitten ausgebildet sein, welcher entlang der Taschenführung zwischen der Belade- und/oder Entladeposition und der Carrier-Annahmeposition transportiert ist. Der Schlitten kann auf wenigstens einer sich entlang der Taschenführung erstreckenden Schiene verschieblich sein. Der Schlitten kann bevorzugt zwischen zwei parallel geführten und sich entlang der Taschenführung erstreckender Gleitschienen gehalten sein.

Die Taschenführung kann einen geraden und/oder einen gekrümmten Verlauf aufweisen. Die Taschenführung kann sich wenigstens abschnittsweise senkrecht zu der Förderschiene erstrecken. Die Taschenführung kann sich wenigstens in dem Bereich des Übergangs der Förderschiene in die Taschenführung senkrecht zu der Förderschiene erstrecken. Vorzugsweise weist die Taschenführung zumindest abschnittsweise einen 90°-Kreisbogen auf. Die Taschenführung kann einen 360°-Kreisbogen aufweisen, mithin umlaufend ausgeführt sein.

Wenn die Taschenführung als eine umlaufende Führung für das mindestens eine Transportelement ausgebildet ist, vorzugsweise als ein Karussell, kann eine Mehrzahl der Transportelemente unter einem festen Winkelabstand zueinander entlang der umlaufenden Führung transportiert sein. Die Taschenführung kann beispielsweise vier Transportelemente aufweisen, die jeweils unter einem 90°-Winkelabstand entlang eines 360°-Kreisbogens der Taschenführung angeordnet sind. Die Transportelemente können untereinander verbunden sein, um die Einhaltung der Beabstandung zu gewährleisten.

Die Transportelemente können alternativ unabhängig voneinander beweglich sein, beispielsweise jeweils einen eigenen Antrieb aufweisen, mit dem sie entlang der Taschenführung, beispielsweise einer umlaufenden Führung der Taschenführung, beweglich sind. Die Transportelemente können beispielsweise jeweils einen eigenen Linearantrieb aufweisen, mit dem sie unabhängig von anderen Transportelementen entlang der Taschenführung beweglich sind. So kann es beispielsweise vorgesehen sein, dass ein mit einem eigenen Antrieb versehenes Transportelement nach dem Entladen des Carriers an der Belade- und/oder Entladeposition mit erhöhter Geschwindigkeit die Carrier-Annahmeposition anfährt und frühzeitig für die erneute Beladung mit einem Carrier zur Verfügung steht.

Der Carrier kann von dem Transportelement entlang der Taschenführung wenigstens abschnittsweise unter einem Winkel relativ zu einer Rotationsachse seiner Laufrollen transportiert sein, der ungleich 90° beträgt. Der Carrier kann vorzugsweise wenigstens abschnittsweise parallel zu der Rotationsachse seiner Laufrollen transportiert sein. Besonders bevorzugt wird der Carrier während seines gesamten Transportwegs in der Taschenführung zwischen der Carrier-Annahmeposition und der Be- und/oder Entladeposition parallel zu der Rotationsachse seiner Laufrollen transportiert, beispielsweise entlang einer geraden und/oder einer kreisbogenförmigen Strecke der Taschenführung.

In dem Transportelement kann der Carrier entlang der Taschenführung zwischen der Carrier-Annahmeposition und der Belade- und/oder Entladeposition in seiner Bewegungsfreiheit in Laufrichtung seiner Laufrollen beschränkt sein, vorzugsweise von gegenüberliegenden Anschlägen, von denen mindestens ein Anschlag und vorzugsweise beide Anschläge von der Taschenführung bereitgestellt sind.

Ein erster der Anschläge kann von einer ersten von zwei gegenüberliegenden Gleitschienen der Taschenführung bereitgestellt sein, zwischen denen das Transportelement entlang der Taschenführung geführt ist. Ein zweiter der beiden Anschläge kann von einer Rückwand des Transportelements bereitgestellt sein, die einer in der Be- und Entladeposition der Förderschiene gegenüberstehenden Öffnung des Transportelements gegenübersteht. Alternativ kann der zweite der beiden Anschläge von einer zweiten der beiden gegenüberliegenden Gleitschienen der Taschenführung bereitgestellt sein.

Ein dem Übergang zugewandter Anschlag der beiden Anschläge kann an dem Übergang unterbrochen und/oder von der Förderschiene durchsetzt sein. Wenigstens einer der beiden Anschläge kann an gegenüberliegende Gleitschienen ausgebildet sein, zwischen denen das Transportelement entlang der Taschenführung geführt ist.

Die Taschenführung kann in der Be- und/oder Entladeposition einen weiteren Übergang von der Taschenführung in eine weitere Förderschiene aufweisen, die an dem weiteren Übergang endet und an dem weiteren Übergang in die Taschenführung mündet, wobei die weitere Förderschiene vorzugsweise eine von dem weiteren Übergang abfallende Gefällestrecke aufweist. Mithilfe der weiteren Förderschiene können die Carrier nach dem Passieren der Be- und/oder Entladeposition aus der Taschenladestation abtransportiert werden. Die weitere Förderschiene kann eine Ausgangsstrecke sein, entlang welcher die Taschen nach dem Belade- oder Entladevorgang zu einem Taschenausgang der Taschenladestation geführt sind, wobei die Ausgangstrecke vorzugsweise wenigstens abschnittsweise als eine Gefällestrecke ausgebildet ist.

Die weitere Förderschiene kann entlang ihres Verlaufs ausgehend von dem weiteren Übergang aus der Taschenladestation herausgeführt sein. Die Taschenladestation kann ein der weiteren Förderschiene beigeordnetes Transportmittel aufweisen, welches dazu eingerichtet ist, in der weiteren Förderschiene angeordnete Carrier entlang der weiteren Förderschiene aus der Taschenladestation heraus zu transportieren.

Das Transportmittel kann einen umlaufenden Antrieb, vorzugsweise einen Riemen, eine Magnetförderkupplung, oder eine Kette, aufweisen, welcher die weitere Förderschiene zumindest abschnittsweise flankiert. Der umlaufende Antrieb kann vorzugsweise eine Vielzahl regelmäßig beabstandeter Zapfen aufweisen, die mit ihren freien Enden die in der weiteren Förderschiene angeordneten Carrier kämmen.

Unterhalb der Taschenführung kann eine ortsfeste Kufe angeordnet sein, entlang welcher eine in einen der Carrier eingehängte Tragetasche mit ihrem Taschenbügel zwischen der Carrier-Annahmeposition und der Belade- und/oder Entladeposition geführt ist. Der Taschenbügel kann gekröpft sein, sodass der Taschenbügel bei dem Anlaufen der ortsfesten Kufe verschwenkt und somit eine Einfüllöffnung der Tragetasche geöffnet wird. Ein gekröpfter Taschenbügel, der eine ortsfeste Kufe anläuft, ist in der EP 2418160 B1 und in der nachveröffentlichten internationalen Patentanmeldung PCT/DE2022/100290 beschrieben.

Die ortsfeste Kufe kann horizontal oder im Wesentlichen horizontal angeordnet sein. Die ortsfeste Kufe kann in Bezug auf die Taschenführung von der Carrier-Annahmeposition in die Belade- und/oder Endladeposition eine Steigung in horizontaler Richtung auf den Taschenbügel zu aufweisen. Die ortsfeste Kufe kann somit insbesondere in der Horizontalrichtung nicht parallel zu der Taschenführung verlaufen. Die ortsfeste Kufe kann jedoch in Vertikalrichtung parallel zu der Taschenführung verlaufen, mithin über ihre gesamte Länge einen konstanten Abstand zu der Taschenführung aufweisen.

Die ortsfeste vor Kufe kann gekrümmt sein, beispielsweise ellipsenförmig ausgebildet sein, mit einem Radius, der sich ausgehend von der Carrier-Annahmeposition zu der Belade- und/oder Entladeposition vergrößert.

Die ortsfeste Kufe kann an der Belade- und/oder Entladeposition ein bewegliches Kufensegment aufweisen, welches zwischen einer Blockierstellung, in welcher das bewegliche Kufensegment an dem Taschenbügel einer sich in der Belade- und/oder Entladeposition befindenden Tragetasche anliegt, und einer Freigabeposition, in welcher das bewegliche Kufensegment mit dem Taschenbügel der sich in der Belade- und/oder Entladeposition befindenden Tragetasche außer Eingriff steht, beweglich ist. Nachdem das bewegliche Kufensegment von der Blockierstellung in die Freigabeposition überführt worden ist, kann der Taschenbügel der Schwerkraft folgend relaxieren, wodurch der Carrier selbsttätig in die zweite Förderschiene eintreten kann. Alternativ ist ein Mitnehmer an dem zweiten Übergang vorgesehen, mit dem der Carrier in die zweite Förderschiene eingesetzt wird. Weiterhin alternativ kann vorgesehen sein, dass der Carrier nach dem Beladen manuell, etwa durch Anstoßen, oder durch manuelle Betätigung eines Transportmechanismus, etwa mithilfe eines Aktors, in die zweite Förderschiene eingesetzt wird.

Die Förderschiene kann an einem Tascheneingang der Taschenladestation einen Dosierstößel aufweisen, der zwischen einer Blockierstellung, in welcher er mit einem der entlang der Förderschiene beweglichen Carrier in Eingriff steht und diesen daran hindert, entlang der Förderschiene zu propagieren, und einer Freigabestellung, in welcher der Dosierstößel mit dem Carrier außer Eingriff steht, hin und her beweglich ist.

Zum Befüllen der Tragetaschen kann ein Taktband vorgesehen sein, mit dem die zu verladenen Gegenstände in eine zu befüllende Tasche gefüllt werden, wobei die Gegenstände von oben in die Tasche fallen. Das Reinfallen stellt auch bei dem manuellen Beladen der Tasche ein Problem dar. Wenn Gegenstände in die Tasche fallen, üben diese beim Aufprall auf den Taschenboden eine Kraft auf die Tasche (und damit auch den Taschenbügel und Carrier) aus, die mit dem Gewicht der Gegenstände zunimmt. Um diese Belastungen zu verringern, kann eine Dämpfungsmatte auf einer Aufstandsfläche für die Tragetaschen in der Taschenladestation vorgesehen sein, die den Taschenboden beim Befüllen stützt.

In einer Ausführungsform kann die Dämpfungsmatte vor dem Befüllen in Vertikalrichtung verfahren, insbesondere angehoben werden, und nach dem Befüllen zurückgefahren, insbesondere abgesenkt werden. In einer anderen Ausführungsform wird die Dämpfungsmatte nicht bewegt, die Tasche aber derart über die Dämpfungsmatte gezogen, dass der Taschenboden angehoben wird. Dazu kann die Dämpfungsmatte schräg angeordnet sein.

Weiterhin kann die Taschenladestation ein Auffangnetz aufweisen, das über wenigstens eine Rolle aufgespannt ist und so die in die Tasche fallenden Gegenstände auffängt, bevor sie in die Taschen aus geringerer Fallhöhe fallen. Das Netz kann anstelle der wenigstens einen Rolle auch an mehreren, etwa vier Befestigungspunkten eingespannt sein, von denen zwei Befestigungspunkte für die Bereitstellung einer Spannkraft bzw. Federkraft beweglich sind.

Im Bereich des Taschenbodens kann die Taschenladestation ein RFID-Lesegeräte aufweisen, das dazu eingerichtet ist, einen RFID-Chip der beladenden Artikeln zu lesen und mit einer eindeutigen ID der Tasche zu verknüpfen.

Die Carrier-Annahmeposition und die Belade- und/oder Entladeposition können entlang der Taschenführung (4) variabel positionierbar sein, wodurch eine einfache Anpassung des Layouts des Hängeförderers erreicht werden kann.

Gemäß einem anderen Aspekt der Erfindung wird ein Verfahren für das Be- und/oder Entladen von Tragetaschen eines Hängeförderers beschrieben, wobei die zuvor beschriebene Taschenladestation verwendet werden soll. Das Verfahren weist die Schritte auf:
- Zuführen mindestens einer Tragetasche einer Taschenladestation nach einem der vorangegangenen Ansprüche, wobei die Tragetasche von einem Carrier entlang der Förderscheine transportiert wird;
- Übergeben des Carriers von der Förderschiene an das Transportelement der Taschenführung an einer Carrier-Annahmeposition, wobei der Carrier die Förderschiene verlässt und von dem Transportelement aufgenommen wird;
- Fördern des Transportelements in der Taschenführung zwischen der Carrier-Annahmeposition und einer von der Förderschiene (2) weiter beabstandeten Belade- und/oder Entladeposition; und
- Be- oder Entladen der Tragetasche in der Belade- und/oder Entladeposition.

Weitere Einzelheiten der Erfindung werden anhand der nachstehenden Figuren erläutert. Dabei zeigt:
- Figur 1: in schematischer Seitenansicht eine beispielhafte Ausführungsform einer erfindungsgemäßen Taschenladestation;
- Figur 2: eine Draufsicht auf die Ausführungsform gemäß Figur 1;
- Figur 3: eine perspektivische Darstellung der Ausführungsform gemäß Figur 1;
- Figur 4: eine perspektivische Ansicht auf die Unterseite eines Details der Ausführungsform gemäß Figur 1;
- Figur 5: in perspektivischer Seitenansicht eine weitere Ausführungsform einer erfindungsgemäßen Taschenladestation; und
- Figur 6: eine Ansicht der Unterseite der Ausführungsform gemäß Figur 6.

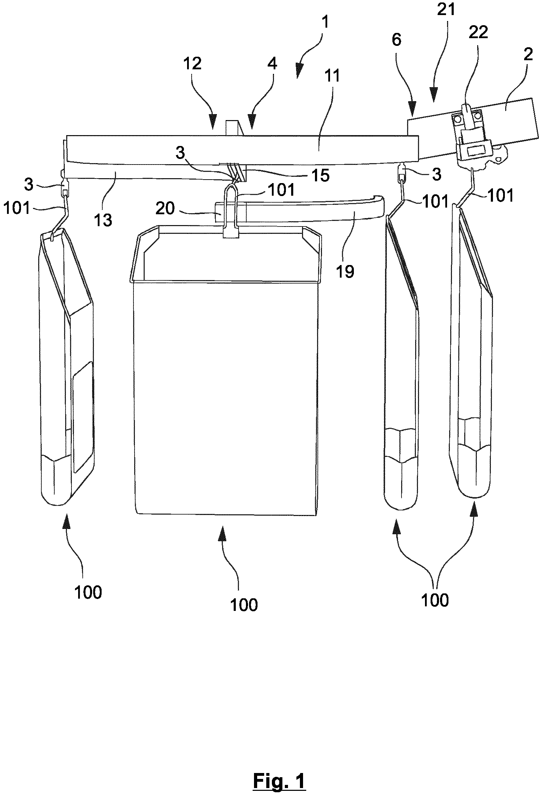

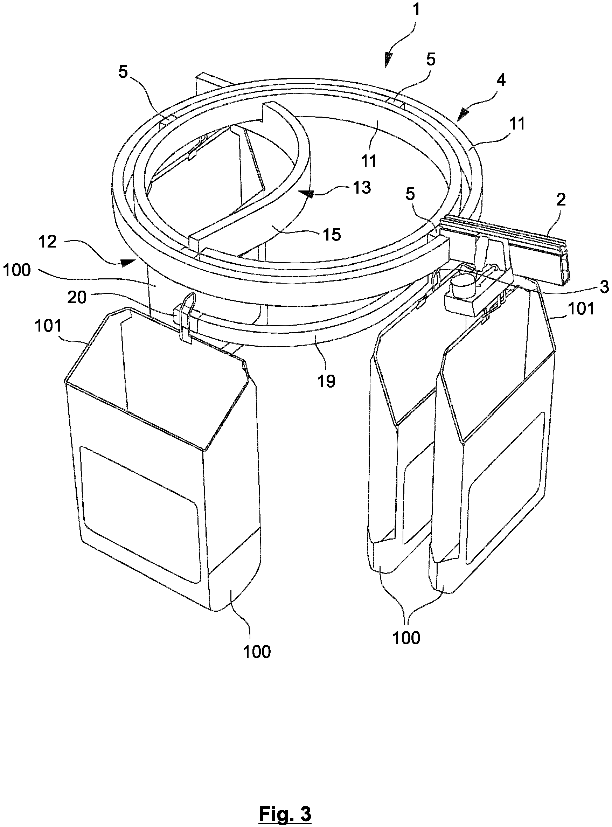

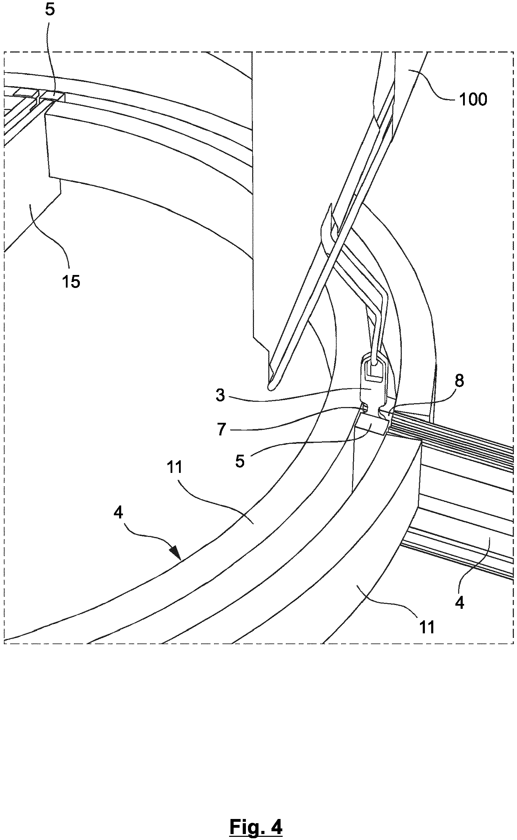

Die in den Figuren 1 bis 4 gezeigte Ausführungsform einer Taschenladestation 1 zum Be- und/oder Entladen von Tragetaschen 100 kann Bestandteil eines komplexen Hängeförderers, beispielsweise eines Taschensorters sein. Gattungsgemäße Taschensorter finden insbesondere in der Logistik Anwendung, beispielsweise im Versandhandel oder im Kurier-Express-Paket-Dienst.

Die Taschenladestation 1 weist eine Förderschiene 2 für die Taschenzuführung mit entlang der Förderschiene 2 beweglichen Carriern 3 zur Aufnahme je einer Tragetasche 100 auf. Über die Förderschiene 2 werden die Taschen 100 auf Anforderung aus dem komplexen Hängeförderer der Taschenladestation 1 zugeführt. Die Förderschiene 2 kann eine Gefällestrecke aufweisen, über die die Taschen 100 selbsttätig einem Tascheneingang 21 der Taschenladestation 1 bzw. einem Übergang 6 von der Förderschiene 2 in die Taschenführung 4 zugeleitet werden. Über einen Dosierstößel 22 kann die Zuführung der Taschen 100 getaktet und anderweitig kontrolliert werden.

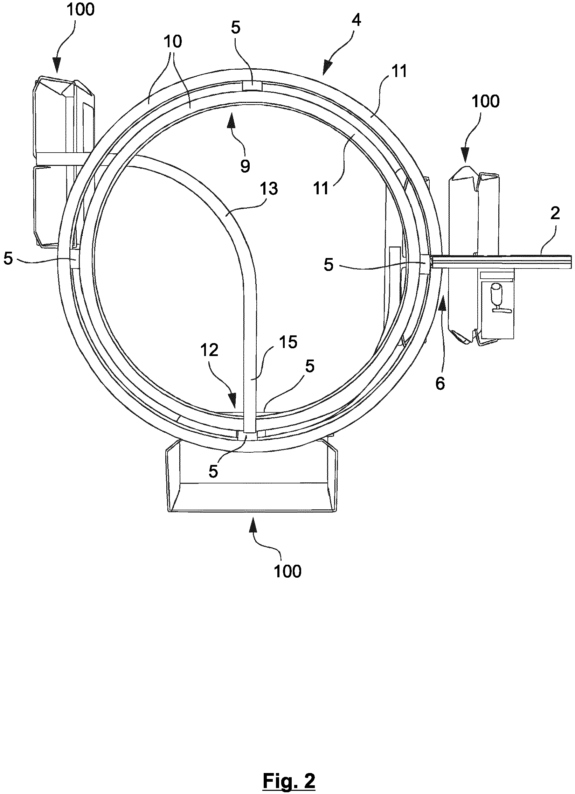

Die Taschenführung 4 ist umlaufend als ein Schienensystem aus zwei parallel und konzentrisch geführten Gleitschienen 11 ausgebildet, zwischen denen mehrere Transportelemente 5 für je einen Carrier 3 geführt sind. Die erste Transportschiene 2 mündet in den Übergang 6 an einer Annahmestelle für Carrier 3. An dem Übergang 6 kann der Carrier 3 aus der Transportschiene 2 durch die äußere der beiden konzentrischen Gleitschienen 11 hindurch in das Transportelement 5 eingeführt werden. Dazu weist das Transportelement 5 an der der Förderschiene 2 zugewandten Seite einen Durchbruch auf bzw. ist die Förderschiene 2 durch die äußere der Gleitschienen 11 hindurchgeführt, so dass die Transportschiene 2 unmittelbar in einen Zwischenraum zwischen den konzentrischen Gleitschienen 11 mündet. Wenn, wie in Figur 2 dargestellt ist, ein Transportelement 5 mit dem der Taschenführung 4 zugewandten Ende der Führungsschiene 2 fluchtet, mithin das Transportelement 5 in der Annahmeposition für Carrier 3 angeordnet ist, kann ein Carrier 3 entlang der Förderschiene 2 von dem Transportelement 5 aufgenommen werden, wozu der Carrier 3 wenigstens mit seinen Laufrollen in dem Transportelement 5 aufgenommen wird und damit die Laufrollen sowohl von der Führungsschiene 2 als auch von den Gleitschienen 11 bzw. der Taschenführung 4 entkoppelt werden.

Der Carrier 3 erfährt bei der Übergabe von der Förderschiene 2 in das Transportelement 5 keine Änderung seiner Ausrichtung in Bezug auf die Förderschiene 2. Das Transportelement 5 ist insbesondere dazu vorgesehen, den Carrier 3 in einer von der Laufrichtung der Rollen des Carriers 3 abweichenden Richtung zu bewegen, um den Carrier 3 aus der vertikalen Flucht der Förderschiene 2 herauszubewegen, sodass die Öffnung der an dem Carrier 3 hängenden Tasche 100 für die Beladung oder Entladung in der Be- und/oder Entladeposition frei zugänglich ist. Der Carrier 3 kann insbesondere in einer Ausrichtung in dem Transportelement 5 aufgenommen sein, bei der die Laufrichtung der Laufrollen senkrecht zur Transportrichtung des Transportelements 5 entlang der Taschenführung 4 ausgerichtet ist.

Abweichend von den aus dem Stand der Technik bekannten Taschenladestationen wird für das Herausbewegen der Tasche aus der vertikalen Flucht der Förderschiene 2 die Tasche 100 nicht in Bezug auf den Carrier verschränkt, sondern der Carrier 3 mit der Tasche 100 unter Beibehaltung seiner Ausrichtung in Bezug auf die Tasche aus der Förderschiene 2 entnommen und von der Taschenführung 4 aus der vertikalen Flucht der Förderschiene 2 herausbewegt. Nach dem Beladen bzw. Entladen der Tasche 100 kann der Carrier 3 wiederum unter weiterer Aufrechterhaltung seiner Ausrichtung in Bezug auf die Tasche aus dem Transportelement 5 und der Taschenführung 4 in eine stromabwärts angeordnete Förderschiene 13 der Taschenladestation 1 eingeleitet werden.

Das Transportelement 5 kann an der der Förderschiene 2 zugewandten Seite eine Öffnung aufweisen. Das Transportelement 5 kann an der von der Förderschiene 2 abgewandten Seite ebenfalls offen sein, sodass das Transportelement 5 zu gegenüberliegenden Seiten, mithin an gegenüberliegenden Vertikalseiten, offen ist. Das Transportelement 5 kann zwischen den gegenüberliegenden Gleitschienen 11 geführt sein. Wenn das Transportelement 5 an den beschriebenen, gegenüberliegenden Vertikalseiten, mithin in Horizontalrichtung offen ist, können die einander zugewandten Innenseiten der konzentrisch zueinander angeordneten Gleitschienen 11 jeweils einen Anschlag 10 für einen in dem Transportelement 5 aufgenommenen Carrier bilden, sodass der Carrier in dem Transportelement sicher gehalten ist, wenn der Carrier in dem Transportelement entlang der Taschenführung zwischen der Annahmeposition und der Be- und/oder Entladeposition transportiert wird.

Die Zusammenschau der Figuren 1 und 2 lässt weiterhin erkennen, dass in Vertikalrichtung unterhalb der Taschenführung 4 eine gekrümmte, ortsfeste Kufe 19 angeordnet ist, entlang welcher eine in einen der Carrier 3 eingehängte Tragetasche 100 mit ihrem Taschenbügel 101 zwischen der Carrier-Annahmeposition und der Belade- und/oder Entladeposition geführt ist. Die ortsfeste Kufe 19 ist horizontal angeordnet und weist in Bezug auf die Taschenführung 4 von der Carrier-Annahmeposition in die Belade- und/oder Endladeposition eine Steigung in horizontaler Richtung auf den Taschenbügel zu auf. Da der Taschenbügel 101 gekröpft ist, wird erreicht, dass der Taschenbügel 101 im Verlauf zwischen der Annahmeposition und der Belade- und/oder Entladeposition immer weiter aufgehebelt wird, mithin ein die Taschenöffnung begrenzende Rahmen des Taschenbügels verschwenkt wird und die Tasche geöffnet wird, wobei der Taschenbügel und damit die gesamte Tasche angehoben wird. Zur Unterstützung des Aufhebelns der Tragetasche kann an dem Taschenbügel ein Druckstück vorgesehen sein, mit dem der Taschenbügel an der ortsfesten Kufe 19 zur Anlage kommt. Des Weiteren kann vorgesehen sein, dass mithilfe von Leitblechen, die in einem unteren Bereich der Tragetasche an mindestens einer Taschenwand angreifen, die Tasche gedreht wird.

Wenn die Tasche die Belade- und/oder Entladeposition erreicht hat und beladen bzw. entladen wurde, kann ein bewegliches Kufensegment 20 der ortsfesten Kufe 19 von einer Blockierstellung, in welcher das bewegliche Kufensegment 20 an dem Taschenbügel 101 anliegt, in eine Freigabeposition, in welcher das bewegliche Kufensegment 20 mit dem Taschenbügel 101 außer Eingriff steht, bewegt werden. Dazu kann das bewegliche Kufensegment 20 beispielsweise in Horizontalrichtung bewegt werden, beispielsweise in der Darstellung gemäß Figur 1 nach links hinter dem Taschenbügel 101 wegbewegt werden.

Da die Tasche 100 zuvor durch das Anlaufen der ortsfeste Kufe 19 angehoben wurde, kann der Taschenbügel 101 schwerkraftgetrieben relaxieren und somit an dem weiteren Übergang 12 in die weitere Förderschiene 13 eintreten. Die weitere Förderschiene 13 mündet an dem weiteren Übergang 12 senkrecht zu der Taschenführung 4 durch die innere Gleitschiene 11 hindurch in den zwischen den beiden Gleitschienen 11 ausgebildeten Freiraum, in dem das Transportelement 5 entlang der Taschenführung 4 geführt ist. Die weitere Förderschiene 13 kann über eine Gefällestrecke 15 in den weiteren Übergang 12 münden, die von dem weiteren Übergang 12 ausgehend abfällt, wodurch der Carrier 3 mit der daran befestigten Tasche 100 in Richtung des Zentrums der Taschenführung 4 bewegt wird.

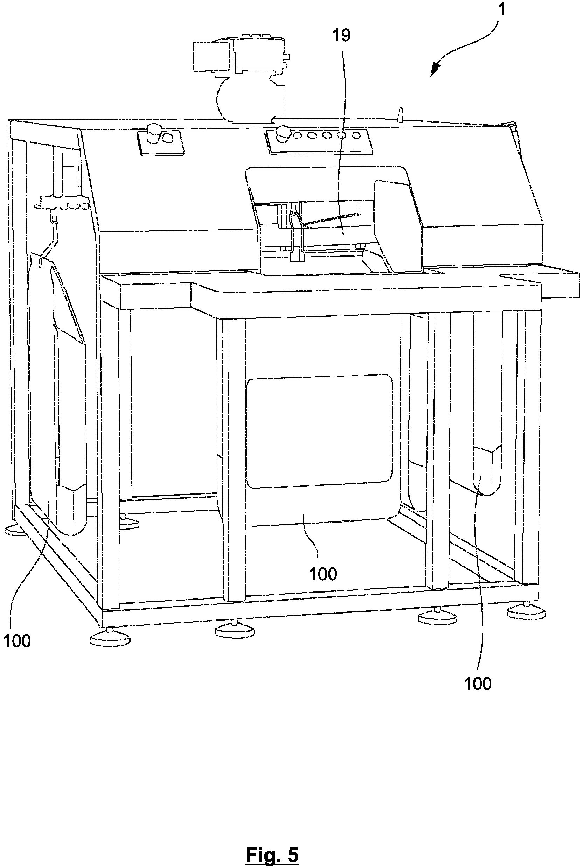

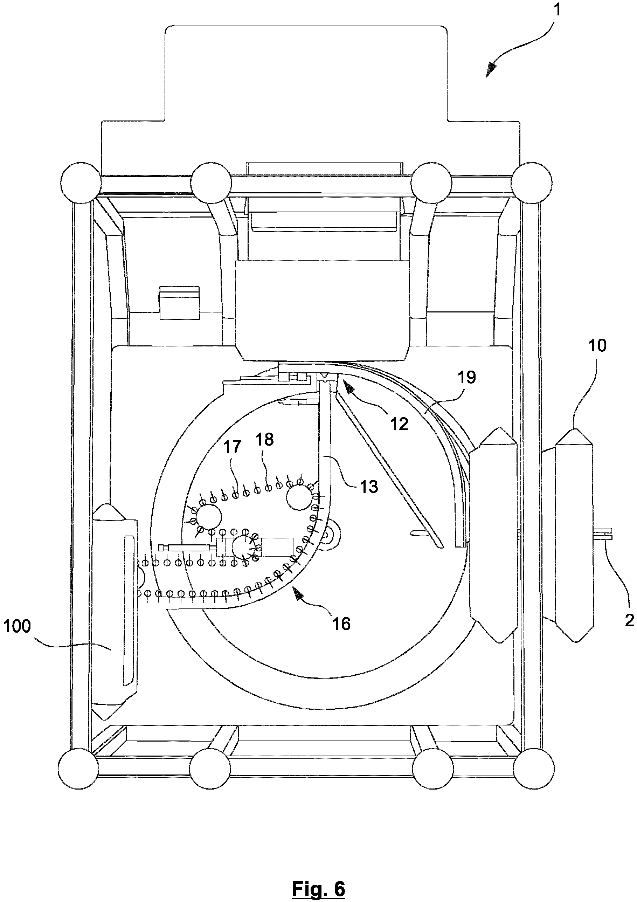

Wie mit Bezug auf die Ausführungsform gemäß den Figuren 5 und 6 beschrieben ist, kann der zweiten Förderschiene 13 ein Transportmittel 16 beigeordnet sein, welches dazu eingerichtet ist, in der weiteren Förderschiene 13 angeordnete Carrier 3 entlang der weiteren Förderschiene 13 aus der Taschenladestation 1 heraus zu transportieren. Das Transportmittel 16 weist vorliegend eine über mehrere Umlenkrollen umgelenkte Kette 17 auf, welche die weitere Förderschiene 13 abschnittsweise an der Unterseite, an welcher die Carrier 3 aus der Förderscheine 13 herausragen, flankiert, insbesondere in einem gekrümmten Bereich, in dem die weitere Förderschiene 13 eine 90°-Krümmung aufweist. Der Verlauf der weiteren Förderschiene 13 ist jedoch grundsätzlich beliebig und lediglich dazu eingerichtet, die Carrier 3 nach dem Verlassen der Be- und/oder Endladeposition zu einem stromabwärtigen Taschenausgang 14 der Taschenladestation 1 zu befördern. Die umlaufende Kette 17 weist regelmäßig beabstandeter Zapfen 18 auf, die sich vorliegend horizontal erstrecken und die mit ihren freien Enden die in der weiteren Förderschiene 13 angeordneten Carrier 3 kämmen, um diese in Richtung des Taschenausgangs 14 der zweiten Förderschiene 13 und damit aus der Taschenladestation 1 heraus zu transportieren.

Die Taschenführung 4 ist bei den gezeigten Ausführungsformen umlaufend und im Wesentlichen kreisförmig geführt, wobei vier Transportelemente 5, die unter einem festen Winkelabstand von 90° zueinander angeordnet sind, entlang der Taschenführung 4 transportiert sind. Die Transportelemente 5 können getaktet in 90°-Inkrementen unter Beibehaltung ihres Winkelabstand geführt sein.

### Bezugszeichenliste:

1 Taschenladestation
2 Förderschiene
3 Carrier
4 Taschenführung
5 Transportelement
6 Übergang
7 Aufnahme
8 Laufrollen
9 umlaufende Führung
10 Anschlag
11 Gleitschiene
12 weitere Übergang
13 weitere Förderschiene
14 Taschenausgang
15 Gefällestrecke
16 Transportmittel
17 Antrieb
18 Zapfen
19 ortsfeste Kufe
20 bewegliches Kufensegment
21 Tascheneingang
22 Dosierstößel
100 Tragetasche
101 Taschenbügel

## Patentansprüche

1. Taschenladestation (1) zum Be- und/oder Entladen von Tragetaschen (100) eines Hängeförderers, wobei die Taschenladestation (1) eine Förderschiene (2) mit entlang der Förderschiene (2) beweglichen Carriern (3) zur Aufnahme je einer Tragetasche (100) aufweist, **dadurch gekennzeichnet, dass** die Taschenladestation (1) eine Taschenführung (4) mit mindestens einem Transportelement (5) für den Transport eines der Carrier (3) aufweist, wobei die Förderschiene (2) an einem Übergang (6) endet, an dem die Förderschiene (2) in die Taschenführung (4) mündet, wobei das Transportelement (5) in der Taschenführung (4) zwischen einer Carrier-Annahmeposition an dem Übergang (6) und einer von der Förderschiene (2) weiter beabstandeten Belade- und/oder Entladeposition gefördert ist.

2. Taschenladestation (1) nach Anspruch 1, bei der das Transportelement (5) in der Carrier-Annahmeposition mit der Förderschiene (2) fluchtet.

3. Taschenladestation (1) nach Anspruch 1 oder 2, bei der das Transportelement (5) in der Belade- und/oder Entladeposition außerhalb der vertikalen Flucht der Förderschiene (2) angeordnet ist.

4. Taschenladestation (1) nach einem der vorangegangenen Ansprüche, bei der das Transportelement (5) eine Aufnahme (7) aufweist, in der der Carrier (3) zumindest mit seinen Carrierkopf, vorzugsweise einschließlich der Laufrollen (8), aufgenommen ist.

5. Taschenladestation (1) nach einem der vorangegangenen Ansprüche, bei der das Transportelement (5) als ein Schlitten ausgebildet ist, welcher entlang der Taschenführung (4) zwischen der Belade- und/oder Entladeposition und der Carrier-Annahmeposition transportiert ist.

6. Taschenladestation (1) nach einem der vorangegangenen Ansprüche, bei der die Taschenführung (4) einen gekrümmten Verlauf aufweist, vorzugsweise zumindest abschnittsweise einen 90°-Kreisbogen aufweist.

7. Taschenladestation (1) nach Anspruch 6, bei der die Taschenführung (4) als eine umlaufende Führung (9) für das mindestens eine Transportelement (5) ausgebildet ist, vorzugsweise als ein Karussell, bei dem eine Mehrzahl der Transportelemente (5) unter einem festen Winkelabstand zueinander entlang der umlaufenden Führung (9) transportiert sind.

8. Taschenladestation (1) nach einem der vorangegangenen Ansprüche, bei der der Carrier (3) von dem Transportelement (5) entlang der Taschenführung (4) wenigstens abschnittsweise unter einem Winkel α relativ zu einer Rotationsachse seiner Laufrollen (8) transportiert ist, der ungleich 90° beträgt, wobei der Carrier (3) vorzugsweise wenigstens abschnittsweise parallel zu der Rotationsachse seiner Laufrollen (8) transportiert ist.

9. Taschenladestation (1) nach einem der vorangegangenen Ansprüche, bei der der Carrier (3) in dem Transportelement (5) entlang der Taschenführung (4) zwischen der Carrier-Annahmeposition und der Belade- und/oder Entladeposition in seiner Bewegungsfreiheit in Laufrichtung seiner Laufrollen (8) beschränkt ist, vorzugsweise von mindestens einem von zwei gegenüberliegenden Anschlägen (10) der Taschenführung (4).

10. Taschenladestation (1) nach Anspruch 9, wobei ein dem Übergang (6) zugewandter Anschlag (10) der beiden Anschläge (10) an dem Übergang (6) unterbrochen ist und/oder von der Förderschiene (2) durchsetzt ist.

11. Taschenladestation (1) nach Anspruch 9 oder 10, bei der die beiden Anschläge (10) an gegenüberliegende Gleitschienen (11) ausgebildet sind, zwischen denen das Transportelement (5) entlang der Taschenführung (4) geführt ist.

12. Taschenladestation (1) nach einem der vorangegangenen Ansprüche, bei der die Taschenführung (4) in der Belade- und/oder Entladeposition einen weiteren Übergang (12) von der Taschenführung (4) in eine weitere Förderschiene (13) aufweist, die an dem weiteren Übergang (12) endet und an dem weiteren Übergang (12) in die Taschenführung (4) mündet, wobei die weitere Förderschiene (13) vorzugsweise eine von dem weiteren Übergang (12) abfallende Gefällestrecke (15) aufweist.

13. Taschenladestation (1) nach Anspruch 10, bei der die weitere Förderschiene (13) entlang ihres Verlaufs ausgehend von dem weiteren Übergang (12) aus der Taschenladestation (1) herausgeführt ist, wobei die Taschenladestation (1) ein der weiteren Förderschiene (13) beigeordnetes Transportmittel (16) aufweist, welches dazu eingerichtet ist, in der weiteren Förderschiene (13) angeordnete Carrier (3) entlang der weiteren Förderschiene (13) aus der Taschenladestation (1) heraus zu transportieren.

14. Taschenladestation (1) nach Anspruch 11, bei der das Transportmittel (16) einen umlaufenden Antrieb (17), vorzugsweise einen Riemen, eine Magnetförderkupplung, oder eine Kette, aufweist, welcher die weitere Förderschiene (13) zumindest abschnittsweise flankiert, bei der umlaufenden Antrieb (17) vorzugsweise eine Vielzahl regelmäßig beabstandeter Zapfen (18) aufweist, die mit ihren freien Enden die in der weiteren Förderschiene angeordneten Carrier (3) kämmen.

15. Taschenladestation (1) nach einem der vorangegangenen Ansprüche, bei der unterhalb der Taschenführung (4) eine ortsfeste Kufe (19) angeordnet ist, entlang welcher eine in einen der Carrier (3) eingehängte Tragetasche (100) mit ihrem Taschenbügel (101) zwischen der Carrier-Annahmeposition und der Belade- und/oder Entladeposition geführt ist.

16. Taschenladestation (1) nach Anspruch 13, bei der die ortsfeste Kufe (19) horizontal oder im Wesentlichen horizontal angeordnet ist und in Bezug auf die Taschenführung (4) von der Carrier-Annahmeposition in die Belade- und/oder Endladeposition eine Steigung in horizontaler Richtung auf den Taschenbügel (101) zu aufweist.

17. Taschenladestation (1) nach Anspruch 13 oder 14, bei der die ortsfeste Kufe (19) an der Belade- und/oder Entladeposition ein bewegliches Kufensegment (20) aufweist, welches zwischen einer Blockierstellung, in welcher das bewegliche Kufensegment (20) an dem Taschenbügel (101) einer sich in der Belade- und/oder Entladeposition befindenden Tragetasche (100) anliegt, und einer Freigabeposition, in welcher das bewegliche Kufensegment (20) mit dem Taschenbügel (101) der sich in der Belade- und/oder Entladeposition befindenden Tragetasche (100) außer Eingriff steht, beweglich ist.

18. Taschenladestation (1) nach einem der vorangegangenen Ansprüche, bei der die Förderschiene (2) an einem Tascheneingang (21) der Taschenladestation (1) einen Dosierstößel (22) aufweist, der zwischen einer Blockierstellung, in welcher er mit einem der entlang der Förderschiene (2) beweglichen Carrier (3) in Eingriff steht und diesen daran hindert, entlang der Förderschiene (2) zu propagieren, und einer Freigabestellung, in welcher der Dosierstößel (22) mit dem Carrier (3) außer Eingriff steht, hin und her beweglich ist.

19. Taschenladestation (1) nach einem der vorangegangenen Ansprüche, bei der die Carrier-Annahmeposition und die Belade- und/oder Entladeposition entlang der Taschenführung (4) variable einstellbar sind.

20. Verfahren für das Be- und/oder Entladen von Tragetaschen (100) eines Hängeförderers, wobei das Verfahren die Schritte aufweist:
- Zuführen mindestens einer Tragetasche (100) einer Taschenladestation (1) nach einem der vorangegangenen Ansprüche, wobei die Tragetasche (100) von einem Carrier (3) entlang der Förderscheine (2) transportiert wird;
- Übergeben des Carriers (3) von der Förderschiene (2) an das Transportelement (5) der Taschenführung (4) an einer Carrier-Annahmeposition, wobei der Carrier (3) die Förderschiene (2) verlässt und von dem Transportelement (5) aufgenommen wird;
- Fördern des Transportelements (5) in der Taschenführung (4) zwischen der Carrier-Annahmeposition und einer von der Förderschiene (2) weiter beabstandeten Belade- und/oder Entladeposition; und
- Be- oder Entladen der Tragetasche (100) in der Belade- und/oder Entladeposition.

## Geänderte Patentansprüche

### Geänderte Patentansprüche gemäss Regel 137(2) EPÜ.

1. Taschenladestation (1) zum Be- und/oder Entladen von Tragetaschen (100) eines Hängeförderers, wobei die Taschenladestation (1) eine Förderschiene (2) mit entlang der Förderschiene (2) beweglichen Carriern (3) zur Aufnahme je einer Tragetasche (100) aufweist, wobei die Taschenladestation (1) eine Taschenführung (4) mit mindestens einem Transportelement (5) für den Transport eines der Carrier (3) aufweist, wobei die Förderschiene (2) an einem Übergang (6) endet, an dem die Förderschiene (2) in die Taschenführung (4) mündet, wobei das Transportelement (5) in der Taschenführung (4) zwischen einer Carrier-Annahmeposition an dem Übergang (6) und einer von der Förderschiene (2) weiter beabstandeten Belade- und/oder Entladeposition gefördert ist, wobei das Transportelement (5) in der Belade- und/oder Entladeposition außerhalb der vertikalen Flucht der Förderschiene (2) angeordnet ist, **dadurch gekennzeichnet, dass** das Transportelement (5) als ein Schlitten ausgebildet ist, welcher entlang der Taschenführung (4) zwischen der Belade- und/oder Entladeposition und der Carrier-Annahmeposition transportiert ist.

2. Taschenladestation (1) nach Anspruch 1, bei der das Transportelement (5) in der Carrier-Annahmeposition mit der Förderschiene (2) fluchtet.

3. Taschenladestation (1) nach einem der vorangegangenen Ansprüche, bei der das Transportelement (5) eine Aufnahme (7) aufweist, in der der Carrier (3) zumindest mit seinen Carrierkopf, vorzugsweise einschließlich der Laufrollen (8), aufgenommen ist.

4. Taschenladestation (1) nach einem der vorangegangenen Ansprüche, bei der die Taschenführung (4) einen gekrümmten Verlauf aufweist, vorzugsweise zumindest abschnittsweise einen 90°-Kreisbogen aufweist.

5. Taschenladestation (1) nach Anspruch 4, bei der die Taschenführung (4) als eine umlaufende Führung (9) für das mindestens eine Transportelement (5) ausgebildet ist, vorzugsweise als ein Karussell, bei dem eine Mehrzahl der Transportelemente (5) unter einem festen Winkelabstand zueinander entlang der umlaufenden Führung (9) transportiert sind.

6. Taschenladestation (1) nach einem der vorangegangenen Ansprüche, bei der der Carrier (3) von dem Transportelement (5) entlang der Taschenführung (4) wenigstens abschnittsweise unter einem Winkel α relativ zu einer Rotationsachse seiner Laufrollen (8) transportiert ist, der ungleich 90° beträgt, wobei der Carrier (3) vorzugsweise wenigstens abschnittsweise parallel zu der Rotationsachse seiner Laufrollen (8) transportiert ist.

7. Taschenladestation (1) nach einem der vorangegangenen Ansprüche, bei der der Carrier (3) in dem Transportelement (5) entlang der Taschenführung (4) zwischen der Carrier-Annahmeposition und der Belade- und/oder Entladeposition in seiner Bewegungsfreiheit in Laufrichtung seiner Laufrollen (8) beschränkt ist, vorzugsweise von mindestens einem von zwei gegenüberliegenden Anschlägen (10) der Taschenführung (4).

8. Taschenladestation (1) nach Anspruch 7, wobei ein dem Übergang (6) zugewandter Anschlag (10) der beiden Anschläge (10) an dem Übergang (6) unterbrochen ist und/oder von der Förderschiene (2) durchsetzt ist.

9. Taschenladestation (1) nach Anspruch 7 oder 8, bei der die beiden Anschläge (10) an gegenüberliegende Gleitschienen (11) ausgebildet sind, zwischen denen das Transportelement (5) entlang der Taschenführung (4) geführt ist.

10. Taschenladestation (1) nach einem der vorangegangenen Ansprüche, bei der die Taschenführung (4) in der Belade- und/oder Entladeposition einen weiteren Übergang (12) von der Taschenführung (4) in eine weitere Förderschiene (13) aufweist, die an dem weiteren Übergang (12) endet und an dem weiteren Übergang (12) in die Taschenführung (4) mündet, wobei die weitere Förderschiene (13) vorzugsweise eine von dem weiteren Übergang (12) abfallende Gefällestrecke (15) aufweist.

11. Taschenladestation (1) nach Anspruch 10, bei der die weitere Förderschiene (13) entlang ihres Verlaufs ausgehend von dem weiteren Übergang (12) aus der Taschenladestation (1) herausgeführt ist, wobei die Taschenladestation (1) ein der weiteren Förderschiene (13) beigeordnetes Transportmittel (16) aufweist, welches dazu eingerichtet ist, in der weiteren Förderschiene (13) angeordnete Carrier (3) entlang der weiteren Förderschiene (13) aus der Taschenladestation (1) heraus zu transportieren.

12. Taschenladestation (1) nach Anspruch 11, bei der das Transportmittel (16) einen umlaufenden Antrieb (17), vorzugsweise einen Riemen, eine Magnetförderkupplung, oder eine Kette, aufweist, welcher die weitere Förderschiene (13) zumindest abschnittsweise flankiert, bei der umlaufenden Antrieb (17) vorzugsweise eine Vielzahl regelmäßig beabstandeter Zapfen (18) aufweist, die mit ihren freien Enden die in der weiteren Förderschiene angeordneten Carrier (3) kämmen.

13. Taschenladestation (1) nach einem der vorangegangenen Ansprüche, bei der unterhalb der Taschenführung (4) eine ortsfeste Kufe (19) angeordnet ist, entlang welcher eine in einen der Carrier (3) eingehängte Tragetasche (100) mit ihrem Taschenbügel (101) zwischen der Carrier-Annahmeposition und der Belade- und/oder Entladeposition geführt ist.

14. Taschenladestation (1) nach Anspruch 13, bei der die ortsfeste Kufe (19) horizontal oder im Wesentlichen horizontal angeordnet ist und in Bezug auf die Taschenführung (4) von der Carrier-Annahmeposition in die Belade- und/oder Endladeposition eine Steigung in horizontaler Richtung auf den Taschenbügel (101) zu aufweist.

15. Taschenladestation (1) nach Anspruch 13 oder 14, bei der die ortsfeste Kufe (19) an der Belade- und/oder Entladeposition ein bewegliches Kufensegment (20) aufweist, welches zwischen einer Blockierstellung, in welcher das bewegliche Kufensegment (20) an dem Taschenbügel (101) einer sich in der Belade- und/oder Entladeposition befindenden Tragetasche (100) anliegt, und einer Freigabeposition, in welcher das bewegliche Kufensegment (20) mit dem Taschenbügel (101) der sich in der Belade- und/oder Entladeposition befindenden Tragetasche (100) außer Eingriff steht, beweglich ist.

16. Taschenladestation (1) nach einem der vorangegangenen Ansprüche, bei der die Förderschiene (2) an einem Tascheneingang (21) der Taschenladestation (1) einen Dosierstößel (22) aufweist, der zwischen einer Blockierstellung, in welcher er mit einem der entlang der Förderschiene (2) beweglichen Carrier (3) in Eingriff steht und diesen daran hindert, entlang der Förderschiene (2) zu propagieren, und einer Freigabestellung, in welcher der Dosierstößel (22) mit dem Carrier (3) außer Eingriff steht, hin und her beweglich ist.

17. Taschenladestation (1) nach einem der vorangegangenen Ansprüche, bei der die Carrier-Annahmeposition und die Belade- und/oder Entladeposition entlang der Taschenführung (4) variabel positionierbar sind.

18. Verfahren für das Be- und/oder Entladen von Tragetaschen (100) eines Hängeförderers in einer Taschenladestation nach einem der Ansprüche 1 bis 17, wobei das Verfahren die Schritte aufweist:
- Zuführen mindestens einer Tragetasche (100) einer Taschenladestation (1) nach einem der vorangegangenen Ansprüche, wobei die Tragetasche (100) von einem Carrier (3) entlang der Förderscheine (2) transportiert wird;
- Übergeben des Carriers (3) von der Förderschiene (2) an das Transportelement (5) der Taschenführung (4) an einer Carrier-Annahmeposition, wobei der Carrier (3) die Förderschiene (2) verlässt und von dem Transportelement (5) aufgenommen wird;
- Fördern des Transportelements (5) in der Taschenführung (4) zwischen der Carrier-Annahmeposition und einer von der Förderschiene (2) weiter beabstandeten Belade- und/oder Entladeposition; und
- Be- oder Entladen der Tragetasche (100) in der Belade- und/oder Entladeposition.
